Europäisches Patentamt

European Patent Office

Office européen des brevets

(11) Veröffentlichungsnummer: **0 215 416**
**A1**

(12) **EUROPÄISCHE PATENTANMELDUNG**

(21) Anmeldenummer: 86112411.3

(22) Anmeldetag: 08.09.86

(51) Int. Cl.⁴: **A01D 34/63** , A01D 34/67 , A01D 34/68

(30) Priorität: 19.09.85 IT 2219485
14.03.86 IT 2123586 U

(43) Veröffentlichungstag der Anmeldung:
25.03.87 Patentblatt 87/13

(84) Benannte Vertragsstaaten:
AT BE CH DE FR GB IT LI LU NL

(71) Anmelder: **Todesco, Andreina**
**Via S. Carlo 3**
**I-36014 Santorso (VI)(IT)**

(72) Erfinder: **Pozzoli, Silvano**
**Via Cementi 11**
**I-36015 Schio (VI)(IT)**
Erfinder: **Pagliaro, Flavia**
**Via Vicenza 6**
**I-36030 Castelnova (VI)(IT)**
Erfinder: **Cademartiri, Allan**
**Via Vicenza 6**
**I-36030 Castelnova (VI)(IT)**
Erfinder: **Pagliaro, Odone**
**Via S. Carlo 3**
**I-36014 Santorso (VI)(IT)**

(74) Vertreter: **Mayer, Hans Benno**
**Via dell'Orso 7/A**
**I-20121 Milano(IT)**

(54) **Automatischer Mähkopf für ein Buschmägerät.**

(57) Ein Mähkopf (1) fuer ein Buschmähgerät, wobei der Mähkopf als Schneidelement elastische Fäden - (16) oder Drähte aufweist, welche radial aus dem Mähkopf austreten, wobei der Mähkopf eine Vorrichtung aufweist, die das automatische Austreten der Schneidfäden (6) aus dem Mähkopf (1) ermöglicht, ohne daß es erforderlich ist, die Drehbewegung des Mähkopfes zu unterbrechen und, daß es ferner nicht erforderlich ist, von Hand auf den Mähkopf einzuwirken, um das Austreten des Mähfadens zu ermöglichen.

FIG.1

## "Automatischer Maehkopf fuer ein Buschmaehgeraet"

Die vorstehende Erfindung betrifft einen Maehkopf fuer ein Buschmaehgeraet, das als Schneidelemente elastische Faeden oder Draehte aufweist, in vorteilhafter Weise Kunststofffaeden, die radial aus dem Maekopf austreten. Der Maehkopf wird in ueblicher Weise ueber eine Motorwelle angetrieben, die in bekannter Weise in einem rohrfoermigen Bauteil untergebracht ist, das als Lager-und als Schutzvorrichtung dient. Die Motorwelle wird in bekannter Weise ueber einen Verbrennungsmotor oder einen Elektromotor mit hoher Drehzahl angetrieben.

Vorrichtungen dieser Art, d.h. Maehvorrichtunge, die mit radial abstehenden Schneidfaeden ausgeruestet sind, sind aus dem Stand der Technik bekannt. Im wesentlichen bestehen diese Maehvorrichtungen aus zwei schalenfoermigen Bauteilen, die in ihrem Inneren eine drehbar gelagerte Spule aufnehmen. Auf der Spule ist ein Fadenvorrat aufgewickelt. In vorteilhafter Weise ist der Maehfaden derartig auf die Spule aufgewickelt, dass seine beiden Fadenenden (die als Schneideinrichtung Verwendung finden) in Radialrichtung aus dem Maehkopf austreten.

Wenn der als Schneidwerkzeug verwendete und meistens aus Kunststoffmaterial bestehende Faden sich langsam begenuetzt hat, besteht fuer die bekannten Maehkoepfe dieser Art die Notwendigkeit, den Antriebsmotor abzustellen und die Drehbewegung des Maehkopfes zu unterbrechen. Anschliessend wird auf eine Spannschraube, die am Unterteil des Maehkopfes angeordnet ist, eingewirkt, wodurch es ermoeglicht wird, die zwei Gehaeusehaelften, die den Maehkopf bilden, gegeneinander auf Abstand zu bringen. Dadurch wird die Fadenspule entriegelt, und im Anschluss, durch Ziehen an den aus dem Maehkopf austretenden Fadenenden, wird der Fadenspule eine Drehbewegung verliehen. Dadurch wird eine Fadenmenge in Radialrichtung aus dem Maehkopf ausgezogen, die fuer die folgenden Maehvorgaenge notwendig ist.

Ueblicherweise ragt der Schneidfaden ungefaehr 10 -20 cm vom Maehkopf ab. Nach herausziehen der gewuenschten Fadenlaenge, ist es erforderlich, die zwei Gehaeusehaelften erneut zusammenzufuegen, mit der vorgesehenen Schraube erfolgt erneut ein Zusammenspannen. Man erkennt, dass die geschilderte Notwendigkeit, die Arbeitsweise der Maeheinrichtung durch Anhalten des Motores zu unterbrechen, sowie die Notwendigkeit eines mechanischen Eingriffes am Maehkopf, (um den Maehfaden fuer eine gewuenschte Laenge aus dem Gehaeuse zu ziehen) ein erheblicher Nachteil ist. Haeufig ist die Spannvorrichtung, die geloest werden muss, nicht einfach zu betaetigen, und es wird unumgaenglich, Hilfseinrichtungen, z.B. besondere Werkzeuge zu verwenden.

Aufgabe der vorstehenden Erfindung ist es, einen neuen Maehkopf der genannten Art vorzuschlagen, der in einem bekannten Buschmaehgeraet verwendbar ist und der das automatische Austreten einer gewuenschten Fadenlaenge aus dem Inneren des Maehkopfes ermoeglicht, ohne dass dazu ein mechanischer Eingriff notwendig wird und ohne die Notwendigkeit, den Antriebsmotor bzw. die Drebewegung des Maehkopfes zu unterbrechen.

Erfindungsgemaess wird die Aufgabe dadurch geloest, dass von der Unterseite des Maehkopfes ein Schaft absteht, der an seinem freien Ende eine Auflage-und Gleitscheibe aufweist, dass ferner das Schaftende, das in das Innere des Maehkopfes ragt, einen Querstift aufweist, der mit Anschlagvorspruengen in Wirkverbindung tritt, die fest mit dem Spulenkoerper, der den Maehfaden aufnimmt, verbunden sind, dass ferner die Auflage-und Gleitscheibe, der Schaft und der Querstift gemeinsam axial gegen die Wirkung eines Federmittels verschiebbar sind und, dass dieses Federmittel im Inneren des Maehkopfes auf dem Querstift und an der Begrenzungswand des oberen Gehaeuseteiles des Maehkopfes anliegt.

Um mit groesstmoeglicher Sicherheit einen zu grossen Austritt des Maehfadens aus dem Gehaeusekopf zu vermeiden, ist es ferner eine Aufgabe der Erfindung, gemaess einer weiteren Ausfuehrungsform, einen Maehkopf vorzuschlagen, bei dem sichergestellt ist, dass bei Uebertragung einer Druckkraft auf die Gleit-und Auflagescheibe, stets nur eine bestimmte Fadenlaenge aus dem Maehkopf austritt.

Diese weitere Aufgabe wird erfindungsgemaess dadurch geloest, dass der verschiebbaren Einrichtung zum Blockieren oder Loesen des Fadenauslaufes, eine Bremsvorrichtung zugeordnet ist, bestehend aus einer unteren Scheibe und einer oberen Scheibe, die drehfest mit der Fadenspule wirkverbunden sind, dass zwischen diesen Scheiben der in Laengsrichtung verschiebbare Querstift angeordnet ist und, dass auf den zueinander gerichteten Seiten der Scheibe, abwechselnd angeordnete Anschlagvorspruengen vorgesehen sind, mit denen der Querstift in Wirkverbindung bringbar ist, in der Art, dass eine Begrenzung der Drehbewegung der Fadenspule in Richtung des Fadenauslaufes bei jeder Laengsverschiebung des Schaftes gegenueber dem Maehkopf erfolgt.

Weitere Vorteile der Erfindung koennen der nun folgenden Beschreibung, und den Zeichnungen entnommen werden.

Fig. 1 zeigt den erfindungsgemaessen Maehkopf in perspektivischer Ansicht;

Fig. 2 zeigt die Vorrichtung in einem Schnitt entlang der Linie II-II der Fig. 3;

Fig. 3 zeigt der Vorrichtung in einem Schnitt entlang der Linie III-III der Fig. 2;

Fig. 4 zeigt schematisch im Schnitt einen Maehkopf gemaess einer weiteren Ausfuehrungsform;

Fig. 5 zeigt in Ansicht die obere Scheibe einer Bremesvorrichtung in Blickrichtung gemaess Pfeil II in Fig. 7;

Fig. 6 zeigt die untere Scheibe der Bremsvorrichtung in Blickrichtung gemaess Pfeil III in Fig. 7;

Fig. 7 zeigt die untere und obere Scheibe der Bremsvorrichtung zusammengefuegt und in Vorderansicht dargestellt; und

Fig. 8 zeigt schematisch die Anordnung und Bewegung des Querstiftes gegenueber den auf den Scheiben angeordneten Anschlaegen bei Betaetigen des verschiebbaren Schaftes.

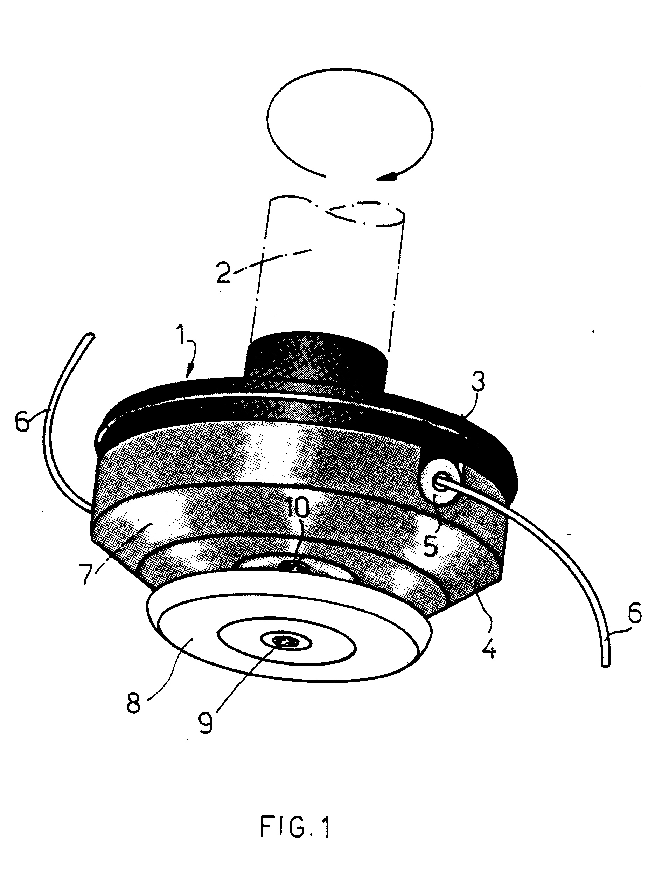

Wie der Fig. 1 zu entnehmen ist, ist der Maehkopf 1 der nicht dargestellten Buschmaehmaschine mit einer Motorwelle 2 wirkverbunden. Durch die Motorwelle wird dem Maehkopf 1 eine Drehbewegung in der Groessenordnung von 13.000 Umdrehungen/min verliehen.

Der Maehkopf 1 besteht im wesentlichen aus zwei schalenfoermigen Bauteilen 3 und 4, die in vorteilhafter Weise aus Aluminium, Kunststoffmaterial oder anderen Materialien bestehen. Die - schalenfoermigen Bauteile 3 und 4 sind ueber Schrauben miteinander verbunden.

Aus dem Maehkopf 1 tritt radial ueber Gleithuelsen 5 der Maehfaden 6 aus dem Gehaeuse aus. Der Maehfaden 6 besteht in vorteilhafter Weise aus festem, elastischen Kunststoff und tritt in Radialrichtung aus dem Gehaeuse 1 aus. Der Maehfaden 6 ist auf einer austauschbaren Vorratsspule 7 aufgewickelt, die im Inneren des Maehkopfes 1 angeordnet ist.

Von der Unterseite des Maehkopfes 1 steht eine Auflage-und Gleitscheibe 8 ab. Diese Scheibe 8 ist drehbar (unter Vorsehung eines Kugellagers 9) von einem Schaft 10 aufgenommen, der sich in das Innere des Maehkopfes 1 fortsetzt.

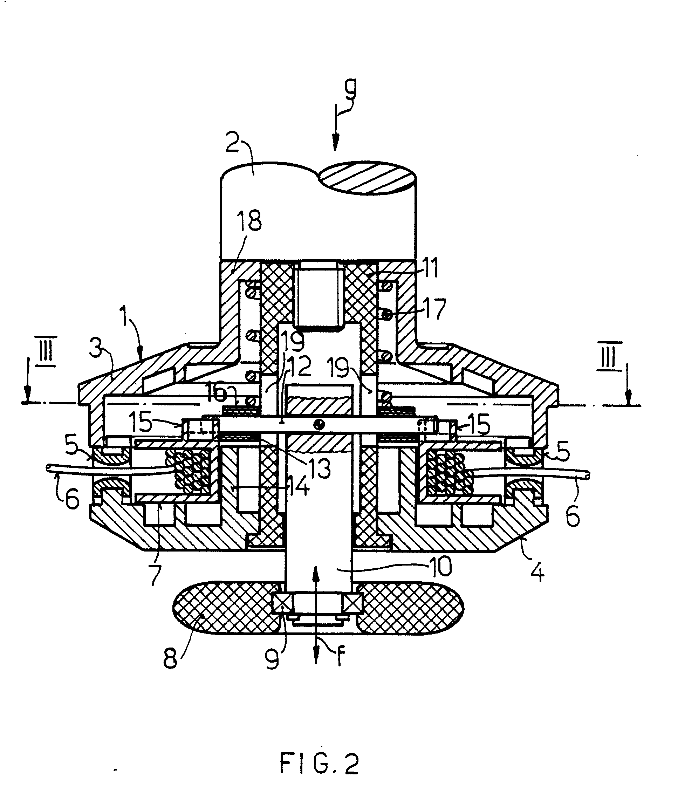

Wie der Fig. 2 besser zu entnehmen ist, erstreckt sich der Schaft 10 in das Innere des Maehkopfes 1, wo der Schaft 10 von einer rohrfoermig ausgebildeten Fuehrungshuelse aufgenommen ist, die mit 11 gekennzeichnet ist.

Das Ende des Schaftes 10, das in das Innere des Maehkopfes 1 ragt, weist einen Querstift 12 auf, der mit dem Schaft 10 fest verbunden ist. Dieser Querstift 12 liegt auf einer Reibscheibe 13 auf, die ihrerseits auf der Spule 7 des Schneidfadens 6 aufliegt. Die Unterseite 4 des Maehkopfes weist eine mittige Erhebung 14 auf, die kreisfoermige Form hat und als Lagerzapfen, sowie als Fuehrung fuer die Spule 7 dient, wenn die Spule beim Abwickeln des Maehfadens 6 eine Drehbewegung durchfuehrt.

Ferner weist der Spulenkoerper 7 an seiner Oberseite Vorspruenge 15 auf, die an der Spule 7 einstueckig angeformt sind. Diese Vorspruenge 15 sind radial nach aussen versetzt und bilden Anschlagmittel, mit denen die Enden des Querstiftes 12 in Wirkverbindung treten. Auf dem Querstift 12 liegt eine Scheibe 16 auf. Auf der Scheibe 16 liegt ein Ende eines Federmittels 17 auf, in vorteilhafter Weise das Ende einer Spiralfeder. Das andere Ende der Feder 17 liegt an der Innenwand des oberen Gehaeuseteiles 18 des Maehkopfes 1 an, der mit der Antriebswelle 2 verbunden ist.

Waehrend der Montage des Maehgehaeuses 1 wird die Feder 17 vorgespannt, in der Art, dass eine staendige Federkraft ueber die Scheibe 16 auf den Querstift 12 und somit auf die Reibscheibe 13 uebertragen wird. Somit wird der Querstift 12 bei Betrieb des Kopfes 1 mit Sicherheit zwischen den vorstehenden Anschlaegen 15 der Spule 7 gehalten, wodurch eine unerwuenschte Drehbewegung der Spule 7 und ein Austreten des Fadens 1 vermieden wird.

Um dem Querstift 12 die Moeglichkeit zu geben, eine Bewegung in Richtung der Pfeiles (f) durchzufuehren, ist vorgesehen, dass die Lagerhuelse 11 fensterartige Ausnehmungen 19 aufweist, die dem Querstift 12 erlauben, eine ungehinderte Laengsbewegung gegen die Kraft der Feder 17 durchzufuehren.

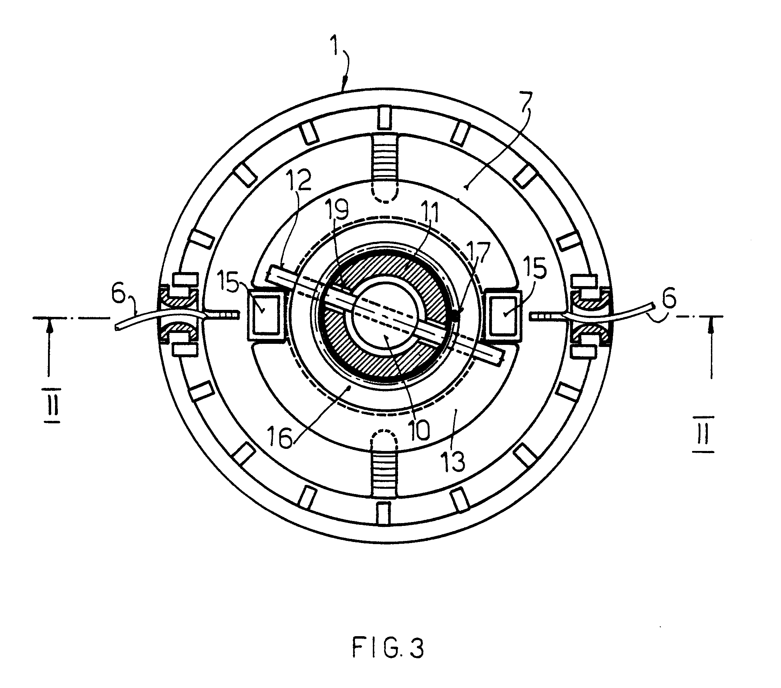

Die Arbeitsweise des bisher beschriebenen Maehkopfes ist folgende: Sobald der Maehkopf 1 ueber die Motorwelle 2 in Drehbewegung versetzt wird, streckt sich der Maehfaden 6 in Radialrichtung, dies aufgrund der auf ihn einwirkenden Fliehkraefte und bildet somit ein Schneidwerkzeug. Da der Faden 6 ueblicherweise aus elastischem Kunststoff besteht, nuetzt sich der Faden 6 mit der Zeit ab, bis nur noch kurze Fadenstuecke verbleiben, die aus dem Maehkopf 1 abstehen (ungefaehr wie in Fig. 2 und 3 dargestellt). Fuer diesen Fall ist es einleuchtend, dass der Maehfaden 6 seine Funktion als Schneidwerkzeug nicht mehr erfuellen kann. Daher ist es notwendig, eine weitere Fadenmenge vom Vorrat 6 , der auf der Spule 7 aufgewickelt ist, abzuziehen.

Dies kann erfindungsgemaess vollkommen automatisch erfolgen, ohne die Notwendigkeit die Drehbewegung des Maehkopfes 1 zu unterbrechen. Es genuegt in diesem Falle, ueber die Motorwelle 2 einen Druck in Richtung des Pfeiles (g) auf die Scheibe 8 die auf dem Boden aufliegt, auszuueben. Dank der Vorsehung des Kugellagers 9 zwischen der Auflagescheibe 8 und dem Schaft 10, fuehrt die Scheibe 8 keine Drehbewegung aus. Wenn die in Richtung des Pfeiles (g) ausgeuebte Druckkraft, die Kraft der Feder 17 uebersteigt, so wird erreicht, dass der Schaft 10 in das Innere des Maehkopfes 1 verschoben wird, auch der Querstift 12 folgt frei dieser Bewegung, dank der Vorsehung der fensterartigen Oeffnungen 19. Dadurch werden die Enden des Querstiftes 12 ausser Wirkverbindung mit den vorstehenden Anschlaegen 15 gebracht, wodurch der Spule 7 die Moeglichkeit gegeben wird, aufgrund der auftretenden Fliehkraefte eine langsame Drehbewegung um die Fuehrung 14, die von der Unterseite 4 des Gehaeuses 1 absteht, durchzufuehren.

Um zu vermeiden, dass die Spule 7 in zu - schnelle Drehbewegung kommt, was eine unerwuenscht grosse Fadenmenge 6 austreten lassen wuerde, ist in vorteilhafter Weise eine Reibscheibe 17 vorgesehen, die als Bremse wirkt. Die Scheibe 13 ist aus Reibmaterial hergestellt und wirkt als Bremse fuer die Spule 7, die aus Kunststoff besteht. Wenn eine ausreichende Radenmenge 6 ausgetreten ist (dies kann durch Beobachten des sich schattenartig abzeichnenden Flugkreises des Fadens 6 erfolgen, der deutlich bei drehendem Maehkopf zu erkennen ist) so genuegt es, erneut den in Richtung des Pfeiles (g) ausgeuebten Druck wegzunehmen. Dadurch bewirkt die Feder 17, dass der Querstift 12 erneut in die in Fig. 2 dargestellt Stellung zurueckgebracht wird. In dieser Stellung wird, aufgrund der Vorsehung der Anschlagvorspruenge 15, erneut die Drehbewegung der Spule 7 unterbochen.

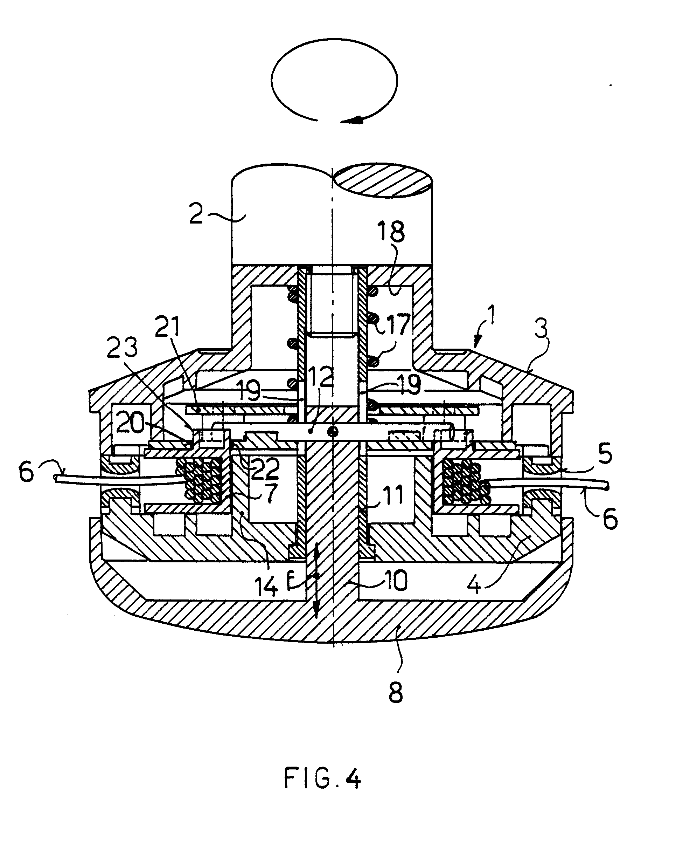

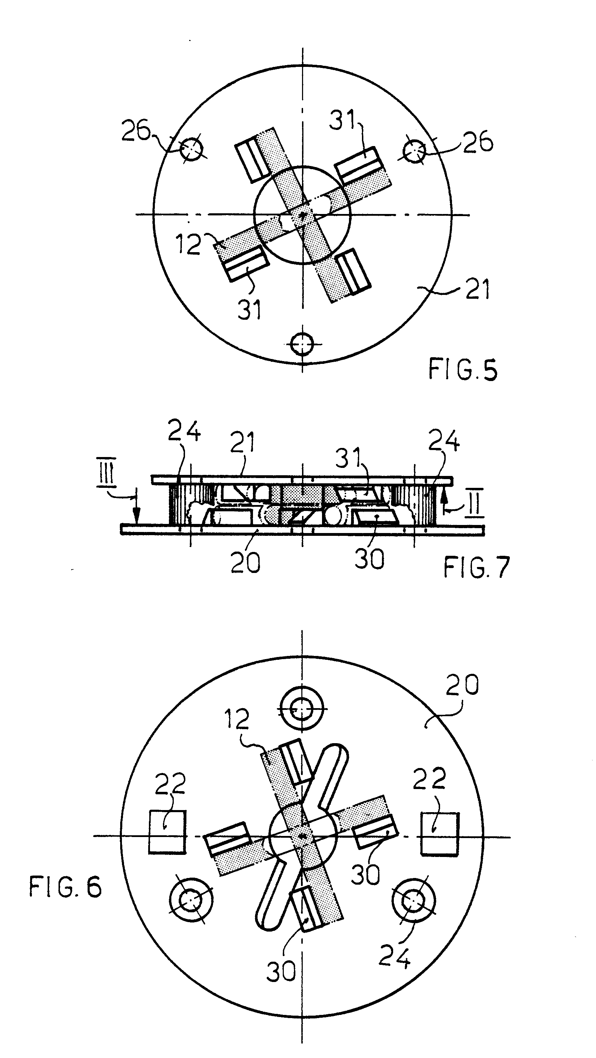

Die Besonderheit der in den Figuren 4 -8 dargestellten zweiten Ausfuehrungsform besteht darin, dass die genannte Bremsvorrichtung aus einer unteren Scheibe 20 und einer oberen Scheibe 21 besteht, die sich gegenueberliegend angeordnet sind und koaxial gegenueber dem Schaft 10 angeordnet sind.

Die Scheiben 20 und 21 begrenzen also jene Zone, in der der Querstift 12 angeordnet ist. Ferner sind die Scheiben 20 und 21 drehfest mit der Spule 7 verbunden.

Im Detail, weist die untere Scheibe 20 diametral angeordnete Oeffnungen 22 auf, in die Anschlaege 23 eingefuegt sind, die in Axialrichtung von der Oberseite der Spule 7 abstehen, derart, dass die Scheibe 20 drehfest mit der Spule 7 verbunden wird.

Von der Scheibenseite 20, die zur oberen Scheibe 21 hin gerichtet ist, stehen Zapfen 24 ab, die mit ihrem freien Ende in Bohrungen 26 der Scheibe 21 eingefuegt sind, derart, dass die Scheiben 20 und 21 miteinander verbunden werden.

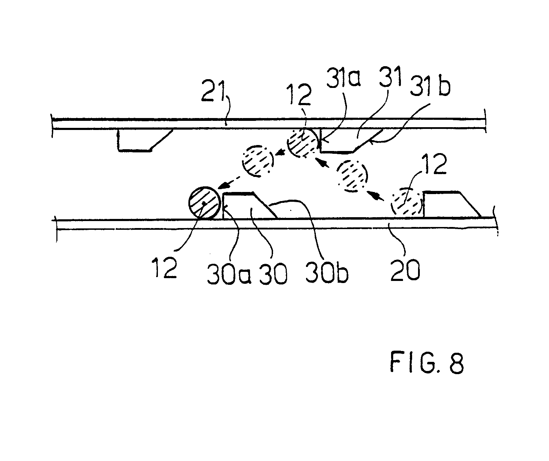

Auf den sich zugekehrten Seiten der Scheiben 20 und 21 sind Anschlaege vorgesehen, die mit 30 und 31 gekennzeichnet sind. Die Anschlaege einer Scheibe sind gegenueber den Anschlaegen der anderen Scheibe versetzt angeordnet, wie dies genauer in Fig. 8 dargestellt ist.

Die Anschlaege 30 und 31 weisen senkrechte Anschlagseiten 30a und 31a auf, die in geneigte Flaechen, die mit 30b und 31b gekennzeichnet sind, uebergehen.

Im Normalfall, wenn kein Druck auf die Auflage-und Gleitscheibe 8 ausgeuebt wird, was ein Verschieben des Schaftes 10 zur Folge haette, liegt der Querstift 12 an den Seiten 30a von diametral gegenueberliegenden Anschlaegen 30 der unteren Scheibe 20 an.

Sobald auf die Auflage-und Gleitscheibe 20 ein Druck ausgeuebt wird, der ein Verschieben des Schaftes 10 gegen die Kraft der Feder 14 bewirkt, erfolgt ein Abloesen des Querstiftes 12 vom entsprechenden Anschlag 30 der unteren Scheibe 20, aufgrund der vorherrschenden Fliehkraft wird eine Drehbewegung der Spule 7 hervorgerufen, die die untere Scheibe 20 mitnimmt, solange bis der Querstift gegen die Anschlagflaeche 31a des Anschlages 31 der oberen Scheibe anschlaegt, wodurch eine weitere Drehbewegung der Spule 7 verhindert wird.

Wird die Scheibe 8 erneut entlastet, so bewegt sich der Querstift 12 erneut auf die untere Scheibe 20 zu und schlaegt nach kurzer Drehbewegung gegen die Anschlagseite 30a des Anschlages 30 an. Erneut wird der Spule 7 ermoeglicht, eine Drehbewegung durchzufuehren, die dem Winkelversatz zwischen zwei aufeinanderfolgenden Anschlaegen 30, 31 entspricht. Diese teilweise Drehbewegung erfolgt jedesmal bei Druckfuehrung einer Laengsbewegung des Schaftes 10 gegenueber dem Gehaeuse des Maehkopes 1.

Wenn es gewuenscht ist groessere Mengen des Schneidfadens 6 aus dem Maehkopf 1 austreten zu lassen, genuegt es, hintereinander mehrere Male Druck auf die Auflage-und Gleitscheibe 8 auszuueben. Aus der bisherigen Beschreibung kann entnommen werden, dass mit dieser weiteren Ausfuehrungsform des Erfindungsgedankens die Moeglichkeit besteht, den Faden 6 gesteuert Stueck fuer Stueck aus dem Maehkopf austreten zu lassen, es wird ferner mit Sicherheit vermieden, dass eine zu grosse Menge des Fadens aus dem Kopf austritt. Dies wird durch die Vorsehung von zwei gegenueber angeordneten Scheiben 20, 21 erzielt, die ueber die Anschlaege 30, 31 eine Einschraenkung der moeglichen Drehbewegung des Querstiftes 12 bilden und nur eine winkelmaessig beschraenkte schrittweise Drehbewegung des Stiftes zulassen.

**Ansprüche**

1. Automatischer Maehkopf (1) fuer ein Buschmaehgeraet, das als Schneidwerkzeug elastische Faeden (6) oder Draehte verwendet, die radial aus dem Maehkopf austreten und auf einer Spule - (7) aufgewickelt sind, die drehbar im Inneren des Gehaeusekopfes angeordnet ist, dadurch gekennzeichnet, dass von der Unterseite des Maehkopfes (1) ein Schaft (10) absteht, der an seinem freien Ende eine Auflage-und Gleitscheibe (8) aufweist, dass ferner das Schaftende, das in das Innere des Maehkopfes (1) ragt, einen Querstift (12) aufweist, der mit Anschlagvorspruengen (15, 23) in Wirkverbindung steht, die fest mit dem Spulenkoerper (7), der den Maehfaden (6) aufnimmt, verbunden ist, dass ferner die Auflage-und Gleitscheibe (8), der Schaft (10) und der Querstift (12) gemeinsam, axial gegen die Wirkung eines Federmittels (17) verschiebbar sind und, dass dieses Federmittel (17) im Inneren des Kopfes (1) auf dem Querstift (12) und an der Begrenzungswand (18) des oberen Gehaeuseteiles des Maehkopfes (1) anliegt.

2. Maehkopf, nach Patentanspruch 1, dadurch gekennzeichnet, dass der in das Kopfgehaeuse (1) ragende Schaft (10) von einem rohrfoermigen Fuehrungsstueck (11) aufgenommen ist.

3. Maehkopf, nach Patentanspruch 1 und 2, dadurch gekennzeichnet, dass der Querstift (12) fensterartige Oeffnungen (19) durchdringt, die in das rohrfoermige Fuehrungsstueck (11) eingearbeitet sind.

4. Maehkopf, nach Patentanspruch 1, >dadurch gekennzeichnet, dass die Gleit-und Auflagescheibe (8), unter Zwischenschaltung eines Kugellagers (9) mit dem Schaft (10) verbunden ist.

5. Maehkopf, nach Patentanspruch 1 bis 4, dadurch gekennzeichnet, dass zwischen dem Querstift (12) und der Oberseite der Spule (7), die den Maehfaden (6) aufnimmt, eine Reibscheibe - (13) angeordnet ist.

6. Maehkopf, nach Patentanspruch 1, dadurch gekennzeichnet, dass vom Boden des Maehkopfes (1) eine mittig angeordnete, Kreisquerschnitt aufweisende Erhebung (14) absteht, die ein Lager und eine Fuehrung fuer die Spule (7) bildet.

7. Maehkopf, nach Patentanspruch 1, dadurch gekennzeichnet, dass die vorspringenden Anschlaege (15, 23) einstueckig mit der Oberseite der Spule (7) ausgebildet sind und, dass diese Anschlaege (15, 23) radial zur Aussenseite der Spule (7) versetzt angeordnet sind.

8. Maehkopf, nach Patentanspruch 1, dadurch gekennzeichnet, dass auf dem Querstift (12) eine Scheibe (16) aufliegt, auf der ein Ende des Federmittels (17) aufliegt.

9. Maehkopf, nach Patentanspruch 1, dadurch gekennzeichnet, dass das Federmittel (17) als Spiralfeder ausgebildet ist.

10. Maehkopf, nach Patentanspruch 1, dadurch gekennzeichnet, dass das Federmittel (17) unter Vorspannung im Maehkopf (1) eingebaut ist.

11. Maehkopf, nach Patentanspruch 1, dadurch gekennzeichnet, dass der verschiebbaren Einrichtung (8, 10, 11) zum Blockieren oder Loesen des Fadenlaufes, eine Bremsvorrichtung zugeordnet ist, bestehend aus einer unteren Scheibe (20) und einer oberen Scheibe (21), die drehfest mit der Fadenspule (7) wirkverbunden ist, dass zwischen diesen Scheiben (20, 21), der in Laengsrichtung (f) verschiebbare Querstifte (12) angeordnet sund und, dass auf den zueinander gerichteten Seiten der Scheiben (21, 20) abwechseind angeordnete Anschlagvorspruenge (31, 30) vorgesehen sind, mit denen der Querstift (12) in Wirkverbindung bringbar ist, in der Art, dass eine Begrenzung der Drehbewegung in Richtung des Fadenauslaufes bei jeder Laengsverschiebung (f) des Schaftes (10) gegenueber dem Maehkopf (1) erfolgt.

12. Maehkopf, nach Patentanspruch 1, dadurch gekennzeichnet, dass die untere Scheibe (20) Oeffnungen (22) aufweist, mit der Anschlaege (23) in Wirkverbindung treten, die axial von der Oberseite der Fadenspule (7) abstehen und eine drehfeste Verbindung zwischen der Spule (7) und der unteren Scheibe (20) herstellen.

13. Maehkopf, nach Patentanspruch 1, dadurch gekennzeichnet, dass die zwei Anschlagscheiben - (21, 20) ueber Distanzzapfen (24) miteinander verbunden sind.

14. Maehkopf, nach Patentanspruch 1, dadurch gekennzeichnet, dass die Anschlagvorspruenge - (30, 31) gleichmaessig in Umfangsrichtung auf den zueinander gerichteten Flaechen der oberen und der unteren Scheibe (21, 20) angeordnet sind.

15. Maehkopf, nach Patentanspruch 1, dadurch gekennzeichnet, dass die Anschlagvorspruenge - (30, 31) auf einer Seite eine senkrechte Anschlagflaeche (31a, 30a) bilden, die mit dem Querstift (12) in Wirkverbindung bringbar ist und, dass die Anschlagvorspruenge (30, 31) auf der anderen Seite eine geneigte Flaeche (31b, 30b) aufweisen.

FIG. 1

FIG. 2

FIG. 3

FIG.4

FIG.5

FIG.7

FIG.6

FIG. 8

**Europäisches Patentamt**

**EUROPÄISCHER RECHERCHENBERICHT**

Nummer der Anmeldung

EP 86112411.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 005 968 (GARDENA KRESS & KASTNER GMBH) <br> * Gesamt * <br> -- | 1,9,10, 11 | A 01 D 34/63 <br> A 01 D 34/67 <br> A 01 D 34/68 |
| X | DE - A1 - 2 734 734 (THE TORO CO.) <br> * Gesamt * <br> -- | 1,9,10, 11,14 | |
| X | US - A - 4 167 812 (MOORE) <br> * Gesamt * <br> -- | 1,6,9, 10,14 | |
| A | US - A - 4 281 505 (FUELLING, Jr, et al.) <br> * Gesamt * <br> -- | 1,6,7, 9,10, 11 | |
| A | US - A - 4 161 820 (MOORE) <br> * Gesamt * <br> -- | 1,10 | **RECHERCHIERTE SACHGEBIETE (Int. Cl.4)** <br> A 01 D 34/00 |
| A | US - A - 4 151 646 (LANE) <br> * Gesamt * <br> ---- | 1 | |

Der vorliegende Recherchenbericht wurde für alle Patentansprüche erstellt.

| Recherchenort | Abschlußdatum der Recherche | Prüfer |
|---|---|---|
| WIEN | 12-11-1986 | RUMLER |